# EUROPEAN PATENT APPLICATION

(11) **EP 1 598 987 A1**
(43) Date of publication of application: **23.11.2005**
(21) Application number: 03707137.0
(22) Date of filing: 27.02.2003
(51) Int. Cl.: H04L 12/56, H04L 13/00

(54) **USE STATE ASCERTAINING METHOD AND DEVICE**

(71) Applicant: FUJITSU LIMITED, Kawasaki-shi, Kanagawa 211-8588 (JP)
(72) Inventor: MIYAMOTO, Satoshi,c/o FUJITSU LIMITED, Kawasaki-shi, Kanagawa 211-8588 (JP); OSAKA, Yoshimichi;c/o FUJITSU HIGASHI-HOKKAIDO SY, Hokkaido 080-0037 (JP)
(74) Representative: Sunderland, James Harry
(86) International application number: PCT/JP2003/002250
(87) International publication number: WO 2004/077764

(57) **Abstract**

In this invention, a step of acquiring information about connection time, information about an amount of transmitted and received data during the connection time and information about line speed during the connection time for a specific user; a judging step of judging whether a utilization state of a specific user is in a predetermined state by using the information about the connection time, the information about the amount of the transmitted and received data and the information about the line speed; and a step of sending a notification concerning the specific user to the specific user, or to an administrator or the like, if it is judged that the utilization state of the specific user is in the predetermined state are executed. Thus, a notification concerning a user having a low utilization degree can be made, and therefore, improvement of the utilization rate can be encouraged.

## Description

### [Technical Field]

This invention relates to a data communication management technique, particularly to a technique for ascertaining the state of use of a line by a user.

### [Background Technology]

Effective use of a line by a user of a mobile environment is very important in view of cost effectiveness in a corporation. Although a service utilizing a charging system, which is not based on the connection time, such as a packet switching system, can be used without caring about the line connection time, a circuit switching type service is often utilized because of conditions such as response. In the case of the circuit switching type, it is ideal that communication is effectively carried out during the connection time. However, it is fact that there is a lot of time not to carry out the data communication, for example, when the user is simply watching the screen or when the user is inputting text for a mail. Although it is possible to avoid a long non-communication state by using a non-communication monitor and disconnection function provided by a connection service provider, it is not possible to know how effectively the line is used.

JP-A-8-315009 discloses an information service charge display apparatus for displaying the utilization charge based on the utilization time of an on-line information service has means for enabling a user to ascertain, when necessary, the current amount of charge based on the elapsed utilization time from the beginning of the utilization even while the user is using the on-line information service. However, this publication does not take into account the effective utilization degree of a line.

### Patent Reference 1: JP-A-8-315009

### [Summary of the Invention]

As described above, the background art does not take into account the effective utilization degree of a line and therefore cannot properly take measures to improve utilization rate of a line.

Thus, an object of this invention is to provide a technique for facilitating effective utilization of a line.

A method for ascertaining a utilization state of a line according to this invention includes: an acquisition step of acquiring information about connection time, information about an amount of transmitted and received data (which may be replaced with, for example, the number of packets) during the connection time and information about line speed during the connection time for a specific user, and storing the information into a storage device; a judgment step of judging whether a utilization state of the specific user is in a predetermined state (for example, a state in which the utilization degree is lower than a predetermined reference) by using the information about the connection time, the information about the amount of the transmitted and received data and the information about the line speed, which are stored in the storage device; and a notification step of, if it is judged that the utilization state of the specific user is in the predetermined state, sending a notification concerning the specific user to the specific user, or to an administrator or the like.

Thus, a notification concerning a user having a low utilization degree can be made, and therefore, improvement of the utilization rate can be encouraged.

In addition, the aforementioned judgment step may include: a step of calculating a threshold value for the amount of the transmitted and received data by using the information about the connection time, the information about the line speed and a predetermined threshold value, and storing the calculated threshold value into the storage device; and a step of comparing the threshold value for the amount of the transmitted and received data with the amount of the transmitted and received data.

Meanwhile, the aforementioned judgment step may include: a step of calculating a numerical value representing an effective utilization degree (for example, the effective utilization ratio or the degree calculated from the effective utilization ratio) by using the information about the connection time, the information about the line speed and the information about the amount of the transmitted and received data, and storing the numerical value into the storage device; and a step of judging whether the numerical value representing the effective utilization degree is less than a predetermined threshold value (for example, a preset value, an average value in a specific corporation or the like). Even when the effective utilization degree is not expressed by a numerical value (for example, when it is expressed by a symbol such as A, B or C), the degree can be associated with a specific numerical value. Therefore, this invention also includes such a mode. Also, for calculating the ineffective utilization degree, it is judged whether the numerical value exceeds the predetermined threshold value or not.

Moreover, the aforementioned acquisition step may include: a step of counting the number of packets passed during the connection time for said specific user, on a communication line through which all the packets for the specific user are passed; and a step of calculating the amount of the transmitted and received data from the counted number of packets. By installing a counter of the number of packets on the communication line as described above, it is possible to calculate the amount of the transmitted and received data with a simple device configuration.

Moreover, this invention may further include a step of calculating data representing the effective utilization degree by using the information about the connection time, the information about the line speed and the information about the amount of the transmitted and received data, and in the aforementioned notification step, a notification containing the data representing the utilization effective degree may be carried out. It becomes possible to more specifically recognize that inefficient utilization of a line was made.

Incidentally, the aforementioned method can be executed, and a program for that are stored in a storage medium or a storage device such as, for example, a flexible disk, a CD-ROM, a magneto-optical disk, a semiconductor memory, or a hard disk. Besides, the program may be distributed in digital signals through a network. Incidentally, the intermediate processing result is temporarily stored in a storage device such as a memory.

### [Brief description of the drawings]

Fig. 1 is a schematic diagram of a system according to an embodiment of this invention;
Fig. 2 is a diagram showing an example of data stored in an authentication database (DB);
Fig. 3 is a diagram showing an example of data stored in a user database (DB);
Fig. 4 is a diagram showing a processing flow according to the embodiment of this invention;
Fig. 5 is a diagram showing an example of data stored in a charging log storage;
Fig. 6 is a diagram showing an example of data stored in a transmitted and received data amount database (DB);
Fig. 7 is a diagram showing a first processing flow of a totaling processing;
Fig. 8 is a diagram showing an example of a connection state table;
Fig. 9 is a diagram showing an example of data stored in a threshold value database (DB);
Fig. 10 is a diagram showing an example of a totaling table;
Fig. 11 is a diagram showing an example of a warning mail; and
Fig. 12 is a diagram showing a second processing flow of the totaling processing.

### [Best mode for carrying out the invention]

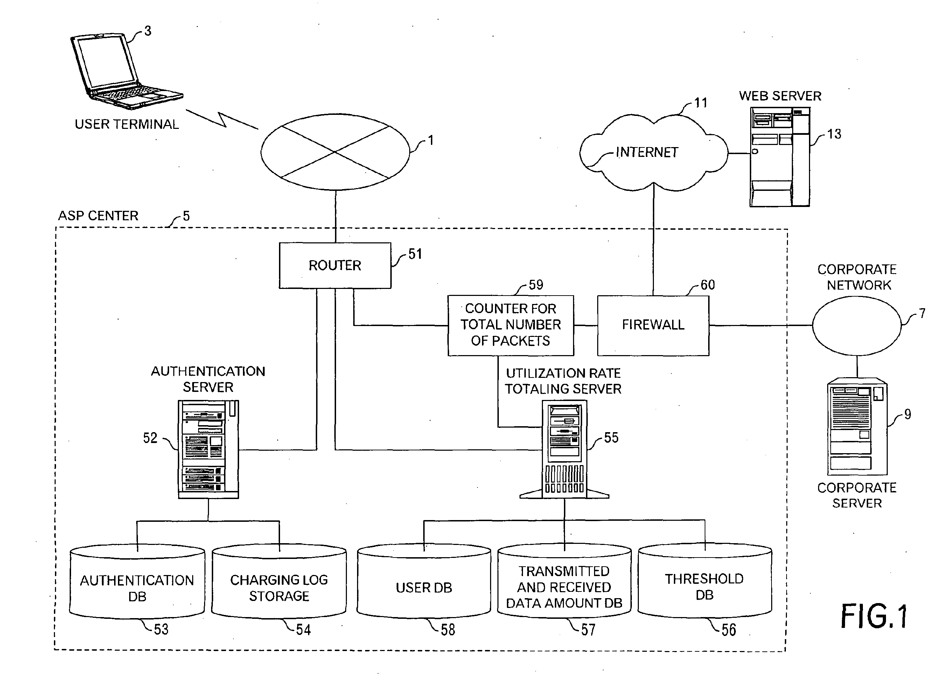

Fig. 1 is a schematic diagram of a system according to one embodiment of this invention. For example, one or plural user terminals 3, which are personal computers or the like operated by corporate employees, are connected to a public network 1, for example, by wireless communication. The user terminal 3 may be a terminal like a personal digital assistant (PDA). The user terminal 3 has a web browser function and a mailer function, and it can browse web pages, and send and receive mails. An application service provider (ASP) center 5 is connected to the public network 1 at an access point corresponding to a predetermined telephone number. A corporate employee operates the user terminal 3 to call the access point and thus connects to a computer connected to the Internet 11 and a corporate network 7. The ASP center 5 is provided with a communication device such as a router 51, thereby communicating with the user terminal 3 connected to the public network 1 side. The router 51 is connected to an authentication server 52 that performs an authentication processing for the access to the ASP center 5, allocation of an IP address, registration of a charging log and the like. Whenever the user terminal 3 calls the access point, the router 51 connects the user terminal 3 to the authentication server 52. The authentication server 52 manages an authentication database (DB) 53 in which data of an ID and password used when the authentication is carried out is registered, and a charging log storage 54 for registering charging logs. The router 51 is also connected to a counter 59 for the total number of packets, which counts the number of packets corresponding to an IP address every predetermined time period. The counter 59 for the total number of packets is connected to a firewall 60. The firewall 60 is connected to the Internet 11 and to the corporate network 7, for example, via a private line. The corporate network 7 is connected with one or plural corporate servers 9. The corporate server 9 is a mail server, web server or the like. Various web servers 13 and many other servers including mail servers, not shown, are connected to the Internet 11.

The counter 59 for the total number of packets is provided on a communication path through which, for example, packets generated by communication with the web server 13 on the Internet 11 or packets generated by communication with the corporate server 9 connected to the corporate network 7 are passed when the user terminal 3 operated by an employee of a specific corporation has accessed the ASP center 5. Incidentally, the counter 59 for the total number of packets periodically outputs data of the counting result or data amount calculated from the counted number of packets, to a utilization rate totaling server 55. This is preferable for minimizing loss of the counting result when trouble occurs in the counter 59 for the total number of packets.

The router 51 is further connected with the utilization rate totaling server 55 that performs the main processing of this embodiment. The utilization rate totaling server 55 is connected to the counter 59 for the total number of packets, for example, via a network, not shown, inside of the ASP center 5. The utilization rate totaling server 55 manages a user database (DB) 58 storing data concerning users, a transmitted and received data amount database (DB) 57 storing data acquired from the counter 59 for the total number of packets or a value of data amount calculated from that data, and a threshold value database (DB) 56 storing threshold value data to determine the effective utilization degree of a line.

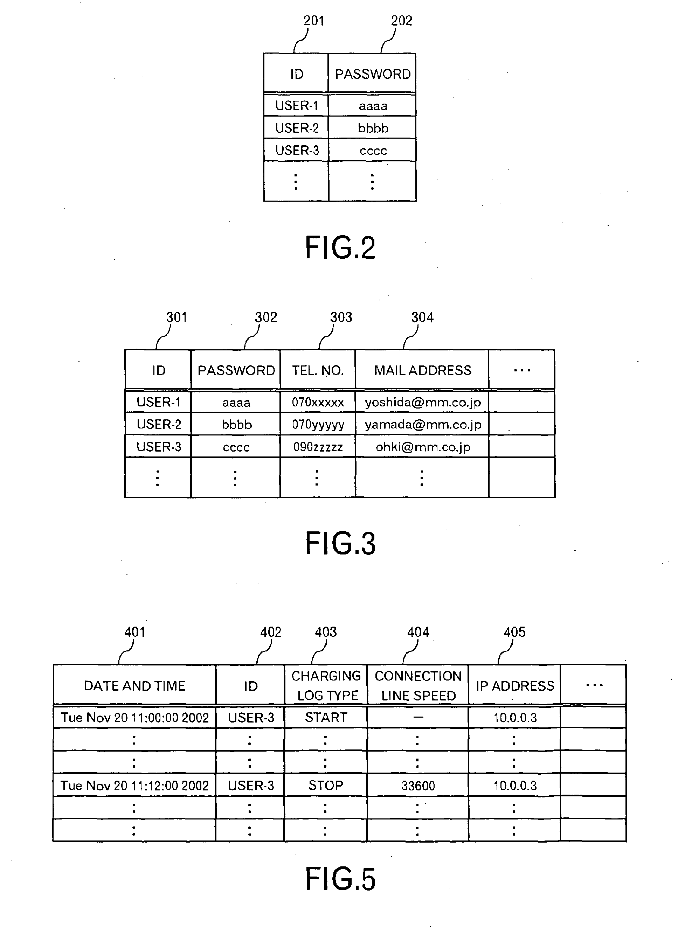

Fig. 2 shows an example of data stored in the authentication DB 53. In the example of Fig. 2, an ID column 201 and a password column 202 are provided. The data stored in the authentication DB 53 are registered from an administrator terminal, not shown.

Fig. 3 shows an example of data stored in the user DB 58. In the example of Fig. 3, an ID column 301, a password column 302, a column 303 of a user telephone number used for access, a mail address column 304 and the like are provided. The data as shown in Fig. 3 are registered from the administrator terminal, not shown.

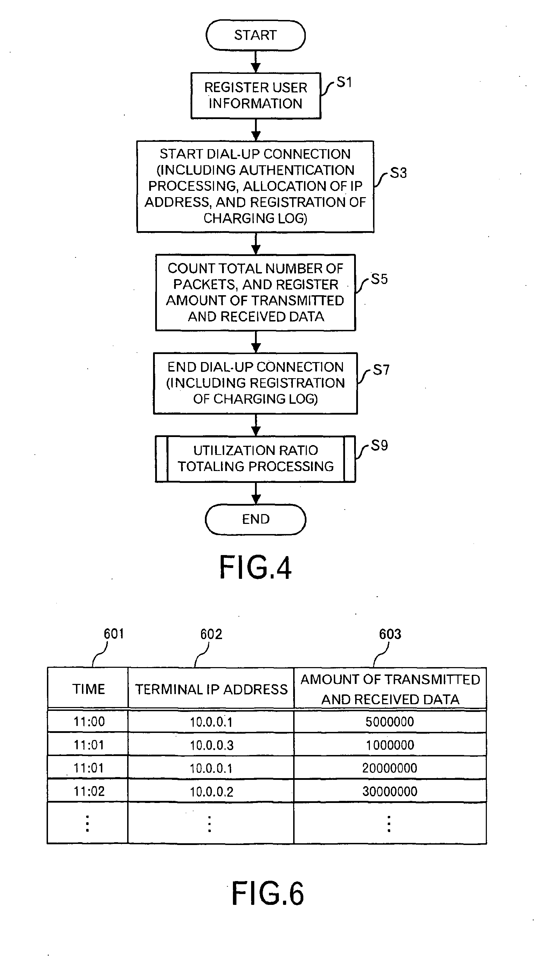

Hereinafter, the processing content by the system shown in Fig. 1 will be described with reference to Figs. 4 to 12. As described above, first, as preprocessing, the administrator of the ASP center 5 registers a pair of an ID and password to the authentication DB 53 and also registers user information including the ID, password, telephone number and mail address to the user DB 58 (step S1 in Fig. 4). After that, an employee of a specific corporation operates the user terminal 3 to start a dial-up connection (step S3). That is, the user terminal 3 calls a predetermined access point. In response to this call, the authentication server 52 in the ASP center 5 performs the authentication processing using the authentication DB 53. That is, the authentication server 52 searches the authentication DB 53 by using the received ID from the ID and password received from the user terminal 3, and reads out the corresponding password. Then, it compares the received password with the read password and judges whether these two passwords coincide with each other. When the authentication succeeded, the authentication server 52 allocates an IP address to the user terminal 3 and notifies the user terminal 3 of the allocated IP address. Moreover, the authentication server 52 registers a charging log for connection start, into the charging log storage 54. When the authentication failed, for example, the line is disconnected.

Fig. 5 shows an example of data stored in the charging log storage 54. In the example of Fig. 5, a date and time column 401, an ID column 402, a charging log type column 403, a connection line speed column 404, an IP address column 405 and the like are provided. When starting the dial-up connection, a record as shown in the first line is registered. Specifically, the date and time (11:00'00", Tuesday, November 20, 2002), "START" representing start as the charging log type, ID (USER-3), IP address (10.0.0.3) and the like are registered. The connection line speed is not registered because it is data that cannot be acquired at the start of the connection.

The user terminal 3 to which an IP address has been allocated can access the web server 13 on the Internet 11 via the firewall 60 or access the corporate server 9 connected to the corporate network 7. At that time, a packet that is sent from the user terminal 3 and requests, for example, web page data is passed through the counter 59 for the total number of packets and also the web page data sent from the web server is passed through the counter 59 for the total number of packets. Even if this web page data is web page data on the web server 13 connected with the Internet 11, and is web page data on the corporate server 9 that is a web server, for example, it is passed through the counter 59 for the total number of packets. Therefore, the counter 59 for the total number of packets counts all the packets passed through it. Incidentally, it counts packets passed within a predetermined time period (for example, one minute), corresponding to the IP address of the user terminal 3. Then, every predetermined time period, the counter 59 for the total number of packets periodically notifies the utilization rate totaling server 55 of data including the IP address of the user terminal 3, the number of passed packets or the amount of transmitted and received data calculated from the number of packets, and time. In response to this, the utilization rate totaling server 55 registers the data including the IP address, the amount of the transmitted and received data, and the time, into the transmitted and received data amount DB 57 (step S5). The amount of the transmitted and received data may be calculated by the counter 59 for the total number of packets or may be calculated by the utilization rate totaling server 55. The amount of the transmitted and received data can be calculated as the number of packets multiplied by the data amount per packet.

Fig. 6 shows an example of data registered at certain timing in the transmitted and received data amount DB 57. In the example of Fig. 6, a time column 601, a terminal IP address column 602, and a column 603 for the amount of the transmitted and received data are provided. For example, the record in the second line shows that the amount of data transmitted to and received from a terminal IP address "10.0.0.3" during a time period from 11:00 to 11:01 is 1,000,000 (bits).

The counter 59 for the total number of packets and the utilization rate totaling server 55 repeat the processing as described above, and accumulate the data into the transmitted and received data amount DB 57 every predetermined time period.

After that, for example, when the user terminal 3 disconnects the line in accordance with an instruction from an employee of a specific corporation, the authentication server 52 performs a processing to end the dial-up connection (step S7). Specifically, the authentication server 52 registers a charging log for the connection end into the charging log storage 54. In Fig. 5, a record as shown in the fourth line is registered. That is, the date and time (11:12'00", Tuesday, November 20, 2002), "STOP" representing the end, ID (USER-3), the connection line speed (33600 bps), the IP address (10.0.0.3) and the like are registered. The line connection speed is contained in the charging log for the connection end.

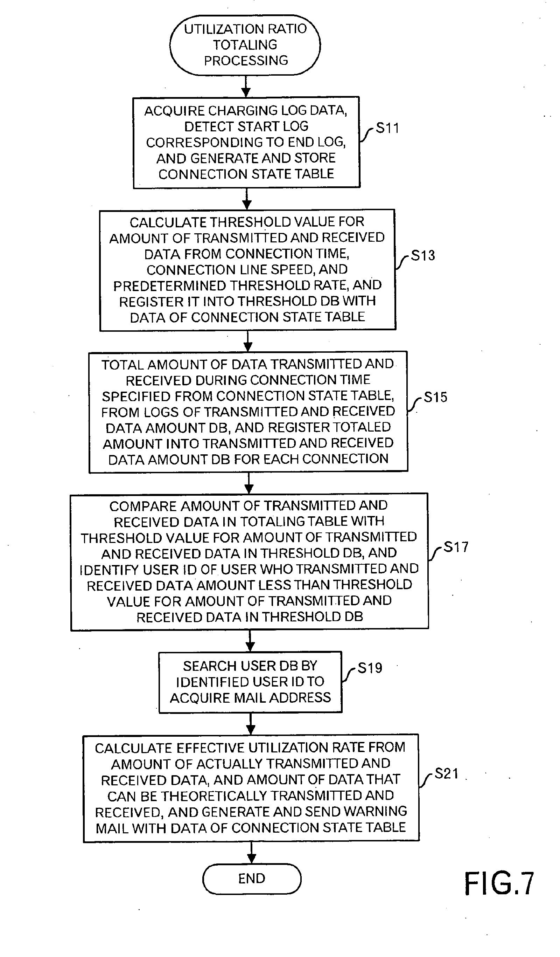

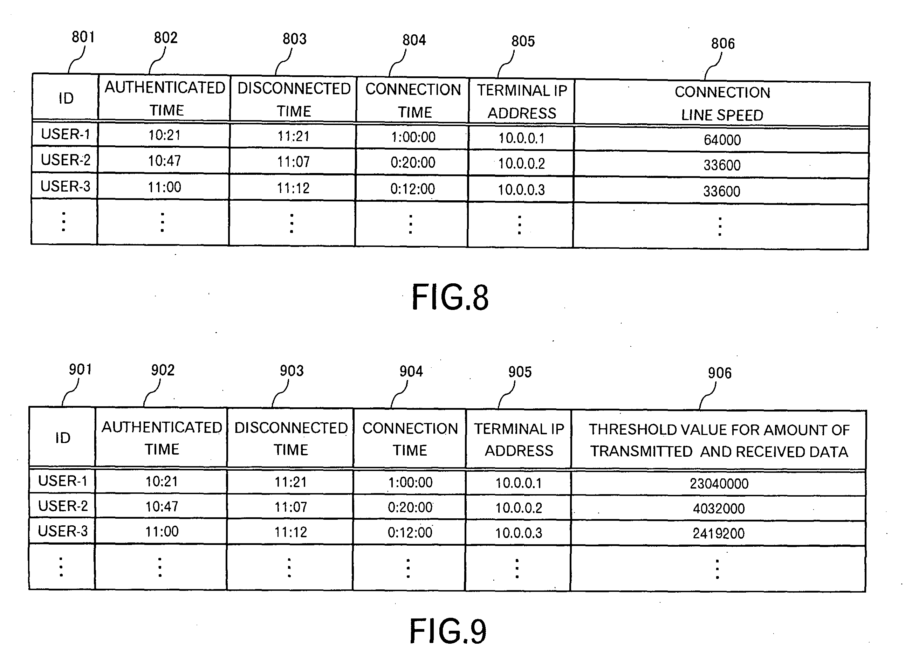

Although the processing of the steps S3 to S7 is repeated, the utilization rate totaling server 55 carries out a totaling processing (step S9) asynchronously with the processing of the steps S3 to S7 and every predetermined time period (for example, every 15 minutes). The utilization rate totaling server 55 carries out a processing shown in Fig. 7 as the totaling processing. First, the utilization rate totaling server 55 acquires charging log data within the aforementioned predetermined period, which is stored in the charging log storage 54 from the authentication server 52, and extracts an end log from the charging log types. Then, it detects a start log corresponding to the extracted end log by using the user ID and IP address of the end log, then generates a connection state table from the end log and the start log, and stores the connection state table into, for example, the charging log storage 54 (step S11). For example, a connection state table as shown in Fig. 8 is generated and stored. In the example of Fig. 8, an ID column 801, a column 802 of the authenticated time representing the start of the connection, a column 803 of the disconnected time representing the end of the connection, a column 804 of connection time calculated from the authenticated time and the disconnected time, a terminal IP address column 805, and a connection line speed column 806 are included. Thus, it is possible to recognize how long from the authenticated time to the disconnected time and by which user of the user ID the specified terminal IP address has been used, and how fast the connection line speed has been.

Next, the utilization rate totaling server 55 calculates a threshold value for the amount of the transmitted and received data from the data about the connection time and the data about the connection line speed, which have been registered into the connection state table, and a predetermined threshold rate, and registers the threshold value together with the data of the connection state table into the threshold value DB 56 (step S13). The threshold value for the amount of the transmitted and received data is calculated as the connection time multiplied by the connection line speed multiplied by the threshold rate. As the threshold rate, a preset fixed value (for example, 10%) may be used, or a statistical quantity such as an average of the effective utilization rates in the past may be used. Fig. 9 shows an example of data registered to the threshold value DB 56. In the example of Fig. 9, an ID column 901, an authenticated time column 902, a disconnected time column 903, a connection time column 904, a terminal IP address column 905 and a column 906 of a threshold value for the amount of the transmitted and received data are provided. For example, in the third line of the connection state table shown in Fig. 8, a record has been registered showing that the user having the user ID of USER-3 communicated at a connection line speed of 33600 bps using a terminal IP address of 10.0.0.3 for 12 minutes from 11:00 to 11:12. Therefore, the threshold value for the amount of the transmitted and received data is 12 (minutes) × 60 (seconds) × 33600 (bps) × 0.1, which is equal to 2419200 (bits). This information has been registered in the third line of the table in the threshold value DB 56 shown in Fig. 9.

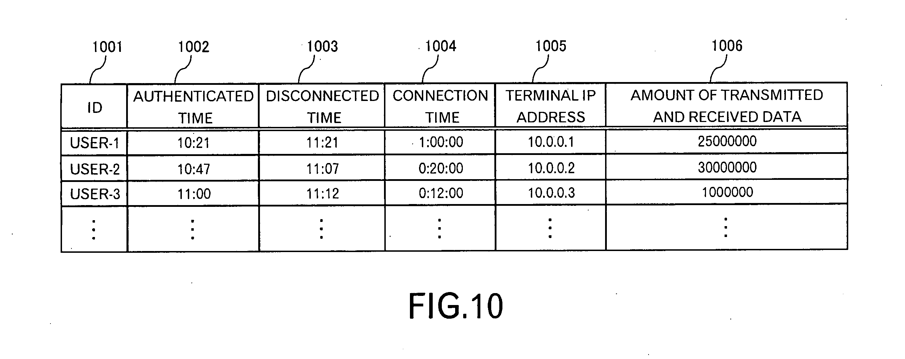

Then, the utilization rate totaling server 55 totals the amount of data transmitted and received during a connection time specified by the connection state table, from the logs in the transmitted and received data amount DB 57, and registers the totaled amount into the totaling table in the transmitted and received data amount DB 57 for each connection (step S15). For example, when there are only the logs shown in the transmitted and received data amount DB 57 shown in Fig. 6, a totaling table as shown in Fig. 10 is generated. In the example of Fig. 10, an ID column 1001, an authenticated time column 1002, a disconnected time column 1003, a connection time column 1004, a terminal IP address column 1005 and a column 1006 of the amount of the transmitted and received data are included. In the first line of Fig. 10, a record about a user having a user ID of USER-1 has been registered. This is an aggregated record of the first line and the third line of the table in the transmitted and received data amount DB 57 shown in Fig. 6, and the amount of the transmitted and received data is 25,000,000 (= 20,000,000+5,000,000) (bits). In the third line of Fig. 10, a record about a user having a user ID of USER-3 has been registered. This is derived from the record in the second line of the table in the transmitted and received data amount DB 57 shown in Fig. 6. The amount of the transmitted and received data in the second line of Fig. 6 and the amount of the transmitted and received data in the third line of Fig. 10 are of the same value.

The utilization rate totaling server 55 compares the amount of the transmitted and received data, which is registered in the totaling table (Fig. 10), with the threshold value for the amount of the transmitted and received data, which is registered in the threshold value DB 56 (Fig. 9), then specifies the user IDs of the users who have transmitted and received only an amount of data less than the threshold value for the amount of the transmitted and received data, which is registered in the threshold value DB 56, and stores the user IDs to a storage device such as a main memory (step S17). For example, when the threshold value for the amount of the transmitted and received data in the first line of the table contained in the threshold DB 56 (Fig. 9) is compared with the amount of the transmitted and received data in the first line of the totaling table (Fig. 10), the amount of the transmitted and received data in the first line of the totaling table is larger and therefore this user ID is not specified at the step S17. Also, when the threshold value for the amount of the transmitted and received data in the first line of the table contained in the threshold value DB 56 (Fig. 9) is compared with the amount of the transmitted and received data in the second line of the totaling table (Fig. 10), the amount of the transmitted and received data in the second line of the totaling table is larger and therefore this user ID is not specified at the step S17. On the other hand, when the threshold value for the amount of the transmitted and received data in the third line of the table contained in the threshold value DB 56 (Fig. 9) is compared with the amount of the transmitted and received data in the third line of the totaling table (Fig. 10), the amount of the transmitted and received data in the third line of the totaling table is smaller and therefore the user ID of USER-3 is specified at the step S17 and stored into a storage device such as a main memory.

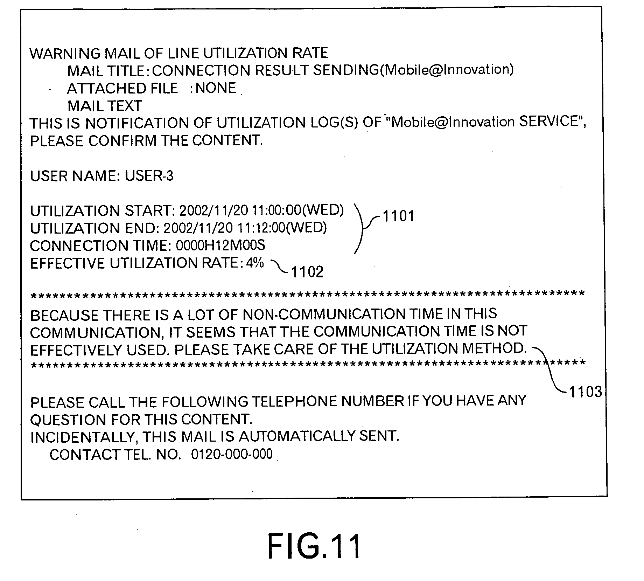

After that, the utilization rate totaling server 55 searches the user DB 58 by using the user ID specified at the step S17 and thus obtains the mail address (step S19). Then, from the amount of actually transmitted and received data and the amount of data that can theoretically be transmitted and received (= connection time × connection line speed), the utilization rate totaling server 55 calculates the effective utilization rate (= (amount of actually transmitted and received data) / (amount of data that can theoretically be transmitted and received)), then generates a warning mail with the data in the connection state table (Fig. 8), and sends it to the mail address acquired at the step S19 (step S21). For example, from the record of the user ID of USER-3 shown in the third line of the connection state table shown in Fig. 8, the connection time multiplied by the connection line speed, which is equal to 24,192,000 (bits), is calculated as the amount of data that can theoretically be transmitted and received. Meanwhile, because the amount of actually transmitted and received data is 1,000,000 (bits) as shown in the totaling table (Fig. 10), the effective utilization rate is calculated as approximately 4% (= 1,000,000/24,192,000×100). Using this data of the effective utilization rate, for example, mail data as shown in Fig. 11 is generated. In the example of Fig. 11, data 1101 containing the utilization start time, the utilization end time and the connection time acquired from the connection state table, the effective utilization rate 1102 calculated at the step S21 and a warning message 1103 are included. Incidentally, in a case where disconnection is made twice or more during the time interval of the cycle to carry out the processing of Fig. 7, data for each disconnection may be included in the warning mail.

By distributing such a warning mail to users, it is possible to make the users recognize their low effective utilization rate and prompt the users to make improvement. Also, data of the similar contents may be sent, for example, to the administrator so that the administrator can recognize data indicating which user has a low effective utilization rate or the like. As a result, effective use of lines and communication facilities, reduction of resources and reduction in the communication charge can be expected.

The administrator may also be additionally notified of statistical data within a predetermined period such as the average value of the effective utilization rates, a list of users having the high effective utilization rate, a list of users having the low effective utilization rate, a list of all the employees in order of the effective utilization rate and the like.

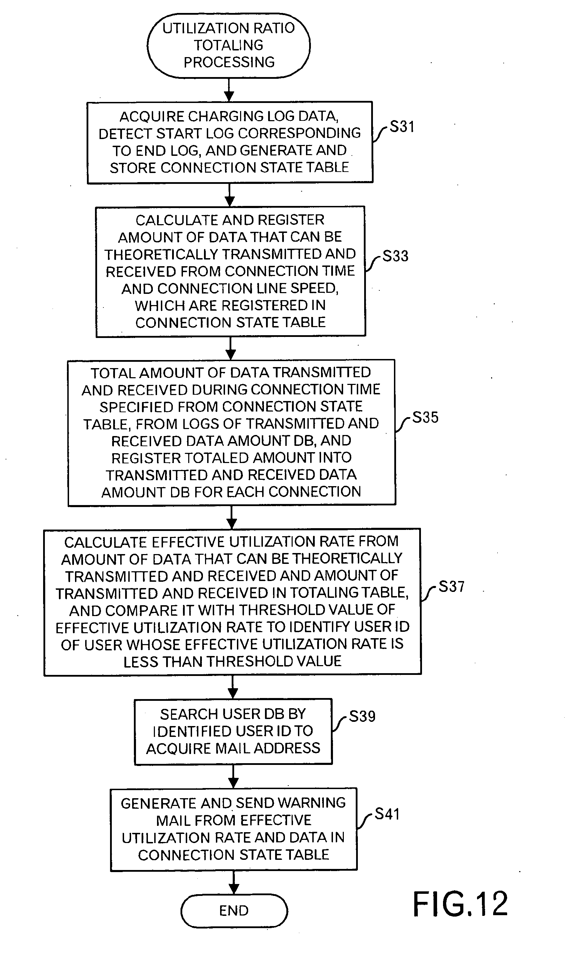

In the processing flow of Fig. 7, an example in which the amount of the transmitted and received data is compared with the threshold value for the amount of the transmitted and received data is indicated. However, the effective utilization rate may be compared with a threshold value for the effective utilization rate. That is, a processing as shown in Fig. 12 may be carried out. First, the utilization rate totaling server 55 acquires charging log data within a predetermined period, which is stored in the charging log storage 54 from the authentication server 52, and extracts an end log from charging log types. Then, it detects a start log corresponding to the extracted end log by using the user ID and IP address of the end log, then generates a connection state table from the start log and the end log, and stores the connection state table to the charging log storage 54 (step S31). This is the same as the step S11 of Fig. 7.

Next, the utilization rate totaling server 55 calculates the amount of data that can theoretically be transmitted and received, from the connection time and the connection line speed, which are registered in the connection state table, and registers the calculated amount of data to the table (step S33). The amount of data that can theoretically be transmitted and received is calculated as the connection time multiplied by the connection line speed.

Then, the utilization rate totaling server 55 totals the amount of data transmitted and received during the connection time specified from the connection state table, from the logs of the transmitted and received data amount DB 57, and registers the totaled amount of data into the totaling table in the transmitted and received data amount DB 57 for each connection (step S35). This is the same as the step S15 of Fig. 7.

Then, the utilization rate totaling server 55 calculates the effective utilization rate from the amount of the data that can theoretically be transmitted and received and the amount of the transmitted and received data registered in the totaling table, compares the calculated effective utilization rate with the threshold value for the effective utilization rate, specifies the user ID of the user having an effective utilization rate less than the threshold value, and then stores the user ID and the data of the effective utilization rate of this user to a storage device such as a main memory (step S37). The threshold value for the effective utilization rate may be, for example, a preset fixed value or a statistical quantity with respect to specified plural users such as the average value.

After that, the utilization rate totaling server 55 searches the user DB 58 by using the user ID specified at the step S17 to acquire the mail address (step S39). This is the same as the step S19 of Fig. 7. Then, the utilization rate totaling server 55 generates a warning mail using the data of the effective utilization rate calculated at the step S37 and the data of the connection state table (Fig. 8), and sends it to the mail address acquired at the step S39 (step S41).

By distributing such a warning mail to users, it is possible to make the users recognize their low effective utilization rate and prompt the users to make improvement. As a result, effective utilization of lines and communication facilities, reduction of resources and reduction in the communication charge can be expected. The ASP center 5 can expect expansion of contracts due to the additional service.

While one embodiment of this invention has been described above, this invention is not limited to this embodiment. That is, for example, the respective computers within the ASP center 5 are configurable to function not by one computer but by plural computers. Moreover, the connection relationship and installation of the computers in the ASP center 5 are mere examples, and other configurations may be employed as long as the similar functions can be achieved.

With respect to the charging log, for example, only the portions related to the embodiment are described above, but more data are actually registered. This is also applied to the data stored in the other databases and the like.

Moreover, although the example of comparing the amount of the transmitted and received data or the utilization rate is described above, the degree of inefficiency may be defined as (the difference between the amount of the data that can theoretically be transmitted and received and the amount of the actually transmitted and received data) divided by the amount of the data that can theoretically transmitted and received, and the utilization state may be judged in accordance with the degree of inefficiency.

In addition, although the example of the calculation based on the amount of the transmitted and received data is described above, calculation based on the number of packets can also be adopted. That is, when the amount of the data that can theoretically be transmitted and received is divided by the amount of data of one packet, the theoretical number of packets is calculated and therefore the degree of effective utilization may be calculated as the number of packets divided by the theoretical number of packets.

## Claims

1. A method for ascertaining a utilization state of a line, comprising:
an acquiring step of acquiring information about connection time, information about an amount of transmitted and received data during said connection time and information about line speed during said connection time for a specific user, and storing said information into a storage device;
a judging step of judging whether a utilization state of said specific user is in a predetermined state by using said information about said connection time, said information about said amount of said transmitted and received data and said information about said line speed, which are stored in said storage device; and
a notification step of sending a notification concerning a specific user, if it is judged that said utilization state of said specific user is in said predetermined state.

2. The method as set forth in claim 1, wherein said judging step comprises:
a step of calculating a threshold value for said amount of said transmitted and received data by using said information about said connection time, said information about said line speed and a predetermined threshold value, and storing said threshold value into a storage device; and a step of comparing said threshold value for said amount of said transmitted and received data with said amount of said transmitted and received data.

3. The method as set forth in claim 1, wherein said judging step comprises :
a step of calculating a numerical value representing an effective utilization degree by using said information about said connection time, said information about said line speed and said information about said amount of said transmitted and received data, and storing said numerical value into a storage device; and a step of judging whether said numerical value representing said effective utilization degree is less than a predetermined threshold value.

4. The method as set forth in claim 1, wherein said acquiring step comprises:
a step of counting a number of packets passed during said connection time for said specific user, on a communication line through which all packets for said specific user are passed; and a step of calculating said amount of said transmitted and received data from the counted number of packets.

5. The method as set forth in claim 1, further comprising a step of calculating data representing an effective utilization degree by using said information about said connection time, said information about said line speed and said information about said amount of said transmitted and received data, and **characterized in that** in said notification step, a notification containing said data representing said utilization effective degree is carried out.

6. A program for causing a computer to execute:
an acquiring step of acquiring information about connection time, information about an amount of transmitted and received data during said connection time and information about line speed during said connection time, and storing said information into a storage device;
a judging step of judging whether a utilization state of a specific user is in a predetermined state by using said information about said connection time, said information about said amount of said transmitted and received data and said information about said line speed, which are stored in said storage device; and
a notification step of sending a notification concerning a specific user, if it is judged that said utilization state of said specific user is in said predetermined state.

7. A storage medium storing said program as set forth in claim 6.

8. An apparatus for ascertaining a utilization state of a line, comprising:
acquiring means for acquiring information about connection time, information about an amount of transmitted and received data during said connection time and information about line speed during said connection time, and storing said information into a storage device;
judging means for judging whether a utilization state of a specific user is in a predetermined state by using said information about said connection time, said information about said amount of said transmitted and received data and said information about said line speed, which are stored in said storage device; and
notification means for sending a notification concerning a specific user, if it is judged that said utilization state of said specific user is in said predetermined state.
